# EUROPEAN PATENT SPECIFICATION

(11) **EP 4 157 753 B1**
(45) Date of publication and mention of the grant of the patent: **02.07.2025**
(21) Application number: 21733382.2
(22) Date of filing: 29.05.2021
(51) Int. Cl.: B65G 1/04

(54) **A STORAGE SYSTEM FOR USE IN FACTORIES FABRICATING BOARDS, ESPECIALLY OSB, MDF OR PARTICLE BOARDS**
LAGERSYSTEM ZUR VERWENDUNG IN FABRIKEN ZUR HERSTELLUNG VON PLATTEN, INSBESONDERE OSB, MDF ODER SPANPLATTEN
SYSTÈME DE STOCKAGE DESTINÉ À ÊTRE UTILISÉ DANS DES USINES DE FABRICATION DE PANNEAUX, EN PARTICULIER DES PANNEAUX OSB, MDF OU DE PARTICULES

(30) Priority: 29.05.2020 FI 20205563
(43) Date of publication of application: 05.04.2023
(73) Proprietor: Dieffenbacher Panelboard Oy, 15560 Nastola (FI)
(72) Inventor: MÄNNIKKÖ, Ari, 15560 Nastola (FI)
(74) Representative: Hartdegen, Helmut
(86) International application number: PCT/EP2021/064469
(87) International publication number: WO 2021/240011

(56) References cited:
- WO-A1-2005/002998
- WO-A1-98/01377
- DE-A1- 102014 012 254
- US-A- 6 042 321

## Description

### OBJECT OF THE INVENTION

The object of the present invention is a storage system for storing stacks of boards, for use in factories fabricating boards, especially particle boards, OSB boards and MDF boards, the storage system comprising at least one main wagon moving in a crosswise direction and at least one pair of satellite wagons travelling in a longitudinal direction, the satellite wagons of which satellite wagon pair are arranged to move side by side and to carry the board stacks from below, and of storage rows that comprise three longitudinal supports, from which storage rows or onto which storage rows the board stacks are transferred.

Generally speaking, wood-based boards manufactured on a continuous-action press line are stored for a certain time in intermediate storage before the downstream work phases, such as sanding and sawing.

### BACKGROUND OF THE INVENTION

The typical mass of large stacks in factories fabricating boards, like particle boards, OSB boards and MDF boards is 40-80 tonnes. The typical stack height is 3-5 m, width 1.8-3.6 m and length 5-9 m. The stacks in the storage system that is the object of the invention are transported on two wagons running on rails under the stack in the longitudinal direction of the storage, which wagons transfer a stack resting on three longitudinal supports to the rows of the storage. These wagons moving in the longitudinal direction are hereinafter called satellite wagons and they always operate in pairs. The transfer of stacks to a storage row and the fetching of stacks from a storage row occurs in such a way that a satellite wagon pair lifts a stack from the bottom surface of the stack, such that the stack detaches from its longitudinal supports, and transports the stack to a storage row and lowers the stack onto the longitudinal supports in the storage or, when fetching from the storage, onto the supports on the main wagon. The moving of a satellite wagon pair in a crosswise direction, i.e. from one longitudinal row to another longitudinal row, occurs by driving the satellite wagon pair to the main wagon, which then transports the satellite wagon pair to the next worksite, i.e. to some other longitudinal row.

Storing systems with apparent resemblances are already known in the state of the art and exemplary shown with WO199801377A1, US 6042321A, and WO2005002998A1. US 6 042 321 A discloses the features of the preamble of claim 1.

The current supply of a satellite wagon pair is arranged by means of a cable reel. In other words, there is a cable reel on the satellite wagon, from which cable is unwound as the satellite wagon pair draws away from the main wagon. Correspondingly, cable is wound back onto the cable reel when the satellite wagon pair approaches the main wagon. This arrangement, however, requires the main wagon to be at the same point of the longitudinal row during the work phase of the satellite wagon pair so that the cable can be unwound from the reel. Since the main wagon must be at the point of the row of the satellite wagon pair, it cannot perform another work phase of its own during the work phase of the satellite wagon pair, but instead must await the return of the satellite wagon pair.

The aim of the present invention is to provide a new type of storage system for large stacks, wherein a satellite wagon pair or satellite wagon pairs transporting a stack can function independently on the longitudinal rows of the storage in such a way that they are not in physical contact with the main wagon moving crosswise, and wherein the main wagon can perform another task when the satellite wagon pair is in the storage area for the stacks.

Another aim of the invention is also to provide a new type of storage system for large stacks, wherein in the case of a possible fault situation a satellite wagon can quickly be replaced with another satellite wagon without time-consuming installation and connection procedures and/or wherein one or more satellite wagons can be serviced during production hours without time-consuming installation and connection procedures.

### SUMMARY OF THE INVENTION

The storage system according to the invention for a factory fabricating boards, especially particle boards, OSB boards or MDF boards is characterized in that the main wagon and a satellite wagon pair have energy supply systems separated from each other for moving the aforementioned main wagon and satellite wagon pair and for performing a lifting movement of a satellite wagon pair.

One preferred embodiment of the storage system according to the invention is characterized in that the energy of the main wagon is arranged to be supplied via a cable reel or via busbars, and the energy of a satellite wagon pair is supplied via busbars on the storage rows.

Another preferred embodiment of the storage system according to the invention is characterized in that a satellite wagon pair is arranged to take the energy it needs for moving itself and for a lifting task from the main wagon when it is on the main wagon for the purpose of a crosswise movement, and when it is on a certain storage row the satellite wagon pair is arranged to take the energy it needs for moving itself and for a lifting task from the energy supply system of said storage row.

Yet another preferred embodiment of the storage system according to the invention is characterized in that the energy supply system comprises a busbar and a current collector fastened to a satellite wagon pair, the busbar being fastened to the supports of the storage rows.

Yet another preferred embodiment of the storage system according to the invention is characterized in that the main wagon is arranged to take a satellite wagon pair to a certain storage row and after that to move to perform another storage task by moving in a crosswise direction at the same time as the satellite wagon pair performs a storage task on said storage row.

Yet another preferred embodiment of the storage system according to the invention is characterized in that the main wagon is arranged to serve more than one satellite wagon pair.

Yet another preferred embodiment of the storage system according to the invention is characterized in that a conveyor conveying a board stack in the longitudinal direction is installed on the main wagon, the conveyor being arranged to receive and to discharge a board stack in the longitudinal direction without a satellite wagon pair.

Yet another preferred embodiment of the storage system according to the invention is characterized in that there are two main wagons, e.g. one at the end of both crosswise directions, in which case a satellite wagon pair is arranged to move for moving either main wagon whatsoever.

Yet another preferred embodiment of the storage system according to the invention is characterized in that the storage system comprises at least one extra satellite wagon, which is arranged to be taken into use without substantial installation procedures and connection procedures in a defect or servicing situation of the regular satellite wagon.

One advantage of the invention that can be mentioned is that the capacity of the storage system rises because more than one storage task can be at least partly performed simultaneously.

### LIST OF FIGURES

In the following, the invention will be described by the aid of some preferred embodiments with reference to the attached drawings, wherein
Fig. 1 presents an overview of a storage system for a factory fabricating particle board and MDF board.
Fig. 2 presents a side view of a main wagon and its current supply.
Fig. 3 presents satellite wagons on a storage row.
Fig. 4 presents the current supply of a satellite wagon.

### DETAILED DESCRIPTION OF THE INVENTION

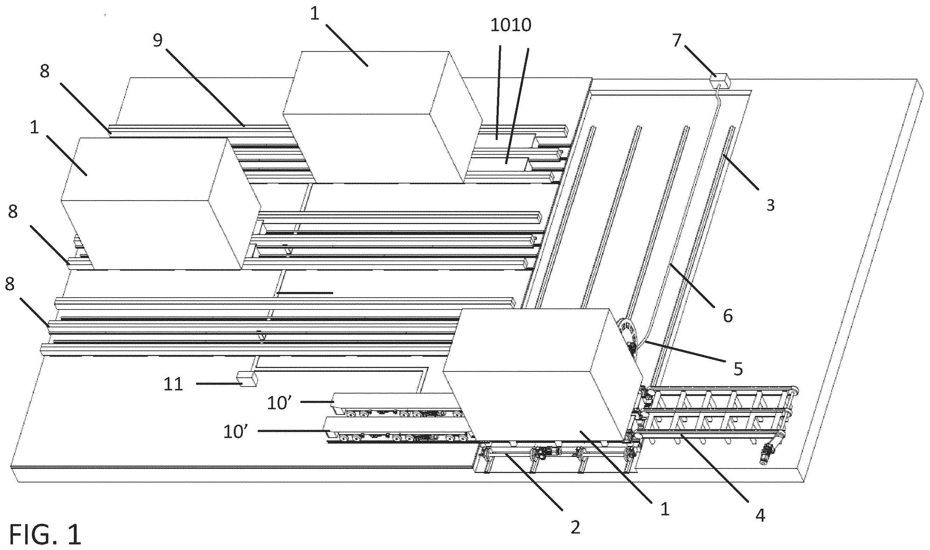

Fig. 1 thus presents an overview of a storage system for a factory fabricating boards. The board stacks, three of which are seen here, are marked with the reference number 1. There can, of course, be more board stacks but for the sake of clarity not all are presented. The board stack at the bottom edge of Fig. 1 is on top of a wagon moving in a crosswise direction, i.e. the main wagon 2. The main wagon moves along rails 3. This direction of movement is therefore called the crosswise direction.

On the right-hand side of the main wagon 2 the figure presents a conveyor 4, along which the board stacks come into the storage and exit it. The current supply of the main wagon takes place via the cable 6 of the current supply unit 7. When the crosswise wagon moves towards the current supply unit 7, the cable 6 winds onto the cable reel 5. Correspondingly, when the main wagon moves away from the current supply unit 7, the cable 6 unwinds from the cable reel 5.

Fig. 1 presents three longitudinal storage rows 8, each of which is formed from three longitudinal supports 9. There can, of course, be considerably more of these storage rows 8 than three. Additionally, they can be on both sides of the main wagon 2. They are presented here now only on the lefthand side of the main wagon 2 when looking at the figure.

Fig. 1 also presents a wagon pair comprising two wagons 10 moving side-by-side in a longitudinal direction. They are referred to hereinafter as satellite wagons, and they lift and move board stacks from below. Presented in the top part of Fig. 1 is a satellite wagon pair that is just going under or coming away from a stack 1. The satellite wagon pair 10 is able to lift a stack into the air and to transfer it either from the main wagon 2 onto a storage row 8 or from a storage row 8 onto the main wagon 2. A satellite wagon pair 10 is thus disposed in such a way that one satellite wagon is located between the centermost support 9 and one of the outermost supports 9. Correspondingly, the second satellite wagon is located between the centermost support 9 and the other outermost support 9. Therefore, there are always two satellite wagons side by side and they are called a satellite wagon pair 10.

Fig. 1 also presents a second satellite wagon pair, which can be seen slightly under the stack 1 on the left side. The main wagon 2 can therefore be arranged to serve more than one satellite wagon pair 10. This second satellite wagon pair is not necessarily needed but, particularly in very large storages, it adds capacity. At the bottom edge of Fig. 1 a satellite wagon pair 10' can also be seen, which can be a back-up. In other words, one satellite wagon 10' or both satellite wagons 10' are taken into use from it if a defect occurs in the regular satellite wagons 10 or they otherwise need servicing. In the storage system according to the invention, commissioning of a replacement satellite wagon 10' is easy without requiring installation work or connection work.

The current supply of the satellite wagon pair 10 is arranged in such a way that the current supply unit 11 supplies current to busbars 12 and by these means to storage rows 8.

The storage system thus operates in practice in such a way that e.g. when a new board stack is brought into the storage, it comes along the conveyor 4 to the main wagon 2, which then transfers the stack to the point of the correct storage row 8. Already under the main wagon 2, or driven there from the storage row 8 in question is a satellite wagon pair 10, which lifts the board stack slightly upwards and transfers the board stack to the storage row and lowers it to the correct spot resting on the supports 9. After that the satellite wagon pair 10 can be driven back to the main wagon 2, which meanwhile could have performed another task. It has not previously been possible in prior art for the main wagon 2 to perform another task while a satellite wagon pair 10 is taking a board stack 1 to a storage row, because the current supply of the satellite wagon pair 10 was physically in contact with the main wagon 2 by cable.

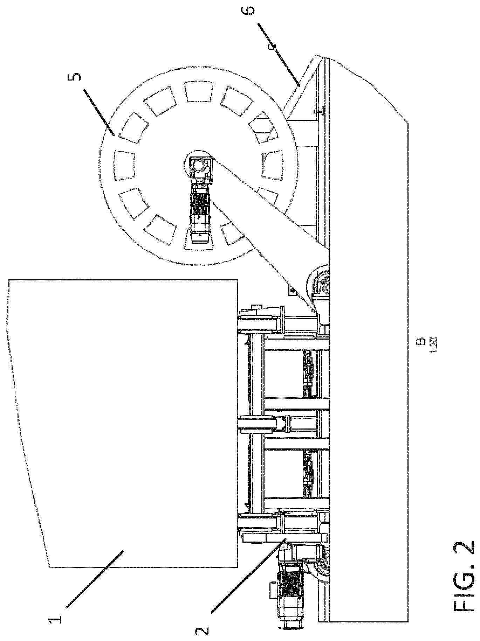

Fig. 2 presents a side view of a main wagon 2, i.e. a wagon moving in a crosswise direction. On top of the main wagon is a board stack 1. Thus, the current supply occurs as described above via the cable 6. The cable 6 winds onto the cable reel 5 and, correspondingly, unwinds from it.

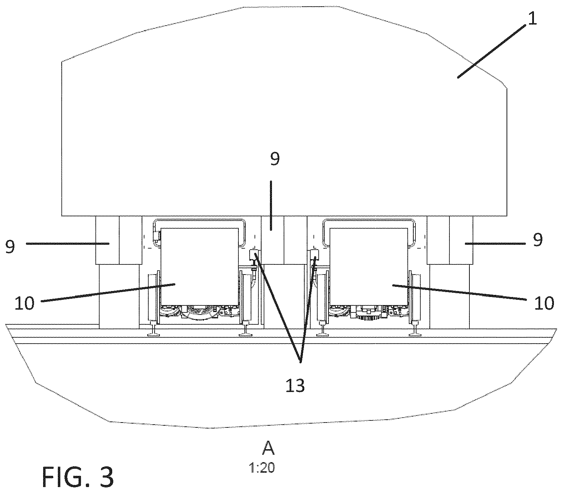

Fig. 3 presents a situation in which a board stack 1 is on a storage row resting on supports 9. The satellite wagons 10, the busbars of which are marked with the reference number 13, are ready to lift a stack upwards from the supports 9 and after that to move the stack in the desired direction.

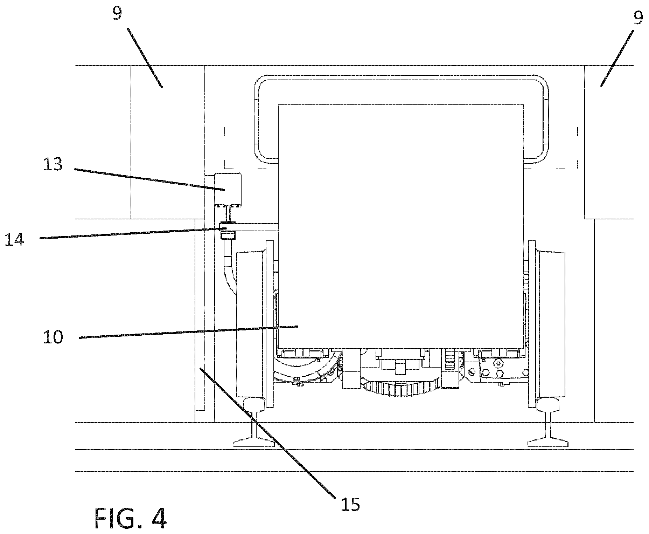

Fig. 4 shows in yet more detail one satellite wagon 10 and its current supply arrangement. The busbar is thus marked with the reference number 13 and the current collector with the reference number 14. The current supply of both satellite wagons occurs in the same manner, although here only one satellite wagon is presented. The current collector 14 is thus in connection with the busbar 13 when the satellite wagon is moving, the busbar in turn receiving its current via the current supply 15 from the busbars 12 presented previously. The energy supply system comprises a busbar 13 and a current collector 14 fastened to a satellite wagon, the busbar being fastened to the supports 9 of the storage rows.

What is essential in the invention is therefore that the main wagon 2 and satellite wagon pair 10 have energy supply systems separated from each other for moving the aforementioned wagons and for performing a lifting movement of a satellite wagon pair 10.

The energy of the main wagon 2 is arranged to be supplied e.g. via a cable reel 5 or via busbars, and the energy of a satellite wagon pair 10 is preferably supplied via the busbars 13 on the storage rows 8. A satellite wagon pair 10 is arranged to take the energy it needs for moving itself and for a lifting task from the main wagon 2 preferably when it is on the main wagon 2 for the purpose of a crosswise movement, and when it is on a certain storage row 8 the satellite wagon pair 10 is arranged to take the energy it needs for moving itself and for a lifting task e.g. from the energy supply system 13, 14 of said storage row 8.

It is obvious to the person skilled in the art that the invention is not limited to the embodiments presented above, but that it can be varied within the scope of the claims presented below. Thus, for example, it is possible that a conveyor conveying a board stack 1 in the longitudinal direction is installed on the main wagon 2, the conveyor being arranged to receive and to discharge a stack 1 in the longitudinal direction without a satellite wagon pair. It is further possible that there are two main wagons 2, e.g. one at the end of each crosswise direction, in which case a satellite wagon pair 10 is arranged to move for moving either main wagon 2 whatsoever.

## Claims

1. A storage system for storing board stacks (1), for use in factories fabricating boards, especially OSB, MDF, or particle boards, the storage system comprising at least one main wagon (2) moving in a crosswise direction and at least one pair of satellite wagons moving in a longitudinal direction, the satellite wagons (10) of which satellite wagon pair are arranged to move side by side and to carry the board stacks from below, and of storage rows (8) that comprise three longitudinal supports, from which storage rows or onto which storage rows the board stacks (1) are transferred, and which main wagon (2) and satellite wagon pair (10) have energy supply systems separated from each other for moving the aforementioned main wagon (2) and aforementioned satellite wagon pair (10), **characterized in that** a satellite wagon pair (10) is arranged to take the energy it needs for moving itself and for a lifting task from the main wagon (2) when it is on the main wagon (2) for the purpose of a crosswise movement, and when it is on a certain storage row (8) the satellite wagon pair (10) is arranged to take the energy it needs for moving itself and for a lifting task from the energy supply system (13, 14) of said storage row (8).

2. A storage system according to claim 1, **characterized in that** the energy of the main wagon (2) is arranged to be supplied via a cable reel (5) or via busbars, and the energy of a satellite wagon pair (10) is supplied via busbars (13) on the storage rows.

3. A storage system according to claim 2, **characterized in that** the energy supply system comprises a busbar (13) and a current collector (14) fastened to a satellite wagon pair, the busbar being fastened to the supports (9) of the storage rows.

4. A storage system according to claim 1, **characterized in that** the main wagon (2) is arranged to take a satellite wagon pair (10) to a certain storage row (8) and after that to move to perform another storage task by moving in a crosswise direction at the same time as the satellite wagon pair (10) performs a storage task on said storage row (8).

5. A storage system according to any of claims 1-4, **characterized in that** the main wagon (2) is arranged to serve more than one satellite wagon pair (10).

6. A storage system according to any of claims 1-5, **characterized in that** a conveyor conveying a board stack (1) in the longitudinal direction is installed on the main wagon (2), the conveyor being arranged to receive and to discharge a board stack (1) in the longitudinal direction without a satellite wagon pair.

7. A storage system according to any of claims 1-6, **characterized in that** there are two main wagons (2), e.g. one at the end of each crosswise direction, in which case a satellite wagon pair (10) is arranged to move for moving either main wagon (2) whatsoever.

8. A storage system according to any of claims 1-7, **characterized in that** the storage system comprises at least one extra satellite wagon (10'), which is arranged to be taken into use without substantial installation procedures and connection procedures in a defect or servicing situation of the regular satellite wagon (10).

## Patentansprüche

1. Lagersystem zum Lagern von Plattenstapeln (1) zur Verwendung in Fabriken, die Platten, insbesondere OSB-, MDF- oder Spanplatten, herstellen, wobei das Lagersystem Folgendes umfasst: mindestens einen Hauptwagen (2), der sich in einer Querrichtung bewegt, und mindestens ein Paar Satellitenwagen, die sich in einer Längsrichtung bewegen, wobei die Satellitenwagen (10) des Satellitenwagenpaars so angeordnet sind, dass sie sich nebeneinander bewegen und die Plattenstapel von unten tragen, und Lagerreihen (8), die drei Längsträger umfassen, wobei die Plattenstapel (1) von diesen oder auf diese Lagerreihen (8) transferiert werden und wobei der Hauptwagen (2) und das Satellitenwagenpaar (10) voneinander getrennte Energieversorgungssysteme zum Bewegen des vorgenannten Hauptwagens (2) und des vorgenannten Satellitenwagenpaares (10) aufweisen, **dadurch gekennzeichnet, dass** ein Satellitenwagenpaar (10) so angeordnet ist, dass es die Energie, die es für seine eigene Bewegung und für eine Hebeaufgabe benötigt, vom Hauptwagen (2) bezieht, wenn es sich zum Zweck einer Querbewegung auf dem Hauptwagen (2) befindet, und wobei, wenn es sich auf einer bestimmten Lagerreihe (8) befindet, das Satellitenwagenpaar (10) so angeordnet ist, dass es die Energie, die es für seine eigene Bewegung und für eine Hebeaufgabe benötigt, aus dem Energieversorgungssystem (13, 14) der Lagerreihe (8) bezieht.

2. Lagersystem nach Anspruch 1, **dadurch gekennzeichnet, dass** die Energie des Hauptwagens (2) so angeordnet ist, dass sie über eine Kabeltrommel (5) oder über Stromschienen zugeführt wird, und dass die Energie eines Satellitenwagenpaares (10) über Stromschienen (13) an den Lagerreihen zugeführt wird.

3. Speichersystem nach Anspruch 2, **dadurch gekennzeichnet, dass** das Energieversorgungssystem eine Stromschiene (13) und einen an einem Satellitenwagenpaar befestigten Stromabnehmer (14) umfasst, wobei die Stromschiene an den Trägern (9) der Lagerreihen befestigt ist.

4. Lagersystem nach Anspruch 1, **dadurch gekennzeichnet, dass** der Hauptwagen (2) so angeordnet ist, dass er ein Satellitenwagenpaar (10) zu einer bestimmten Lagerreihe (8) bringt und sich danach bewegt, um eine andere Lageraufgabe auszuführen, indem er sich zur gleichen Zeit, zu der das Satellitenwagenpaar (10) eine Lageraufgabe an der Lagerreihe (8) ausführt, in einer Querrichtung bewegt.

5. Lagersystem nach einem der Ansprüche 1 bis 4, **dadurch gekennzeichnet, dass** der Hauptwagen (2) so angeordnet ist, dass er mehr als ein Satellitenwagenpaar (10) bedienen kann.

6. Lagersystem nach einem der Ansprüche 1 bis 5, **dadurch gekennzeichnet, dass** auf dem Hauptwagen (2) ein Förderer angebracht ist, der einen Plattenstapel (1) in der Längsrichtung befördert, wobei der Förderer so angeordnet ist, dass er einen Plattenstapel (1) in der Längsrichtung ohne ein Satellitenwagenpaar aufnimmt und abgibt.

7. Lagersystem nach einem der Ansprüche 1 bis 6, **dadurch gekennzeichnet, dass** zwei Hauptwagen (2) vorhanden sind, z. B. einer am Ende jeder Querrichtung, wobei in diesem Fall ein Satellitenwagenpaar (10) so angeordnet ist, dass es sich zum Bewegen eines beliebigen Hauptwagens (2) bewegt.

8. Lagersystem nach einem der Ansprüche 1 bis 7, **dadurch gekennzeichnet, dass** das Lagersystem mindestens einen zusätzlichen Satellitenwagen (10') umfasst, der so angeordnet ist, dass er bei einem Defekt oder in einer Wartungssituation des regulären Satellitenwagens (10) ohne wesentliche Installations- und Anschlussprozeduren in Betrieb genommen werden kann.

## Revendications

1. Système de stockage pour stocker des piles de panneaux (1), destiné à être utilisé dans des usines de fabrication de panneaux, notamment des panneaux OSB, MDF ou des panneaux de particules, le système de stockage comprenant au moins un chariot principal (2) se mettant en mouvement dans une direction transversale et au moins une paire de chariots satellites se mettant en mouvement dans une direction longitudinale, les chariots satellites (10) de laquelle paire de chariots satellites sont agencés pour se mettre en mouvement côte à côte et pour porter les piles de panneaux par le dessous, et de rangées de stockage (8) qui comprennent trois supports longitudinaux, à partir desquelles rangées de stockage ou sur lesquelles rangées de stockage les piles de panneaux (1) sont transférées, et lequel chariot principal (2) et laquelle paire de chariots satellites (10) ont des systèmes d'alimentation en énergie séparés les uns des autres pour mettre en mouvement le chariot principal (2) précité et la paire de chariots satellites (10) précitée, **caractérisé en ce qu'**une paire de chariots satellites (10) est agencée pour prélever l'énergie dont elle a besoin pour se mettre elle-même en mouvement et pour une tâche de levage à partir du chariot principal (2) lorsqu'elle est sur le chariot principal (2) dans le but d'un mouvement transversal, et lorsqu'elle est sur une rangée de stockage (8) donnée, la paire de chariots satellites (10) est agencée pour prélever l'énergie dont elle a besoin pour se mettre elle-même en mouvement et pour une tâche de levage à partir du système d'alimentation en énergie (13, 14) de ladite rangée de stockage (8).

2. Système de stockage selon la revendication 1,
**caractérisé en ce que** l'énergie du chariot principal (2) est agencée pour être fournie via un enrouleur de câble (5) ou via des barres omnibus, et l'énergie d'une paire de chariots satellites (10) est fournie via des barres omnibus (13) sur les rangées de stockage.

3. Système de stockage selon la revendication 2,
**caractérisé en ce que** le système d'alimentation en énergie comprend une barre omnibus (13) et un collecteur de courant (14) fixé à une paire de chariots satellites, la barre omnibus étant fixée aux supports (9) des rangées de stockage.

4. Système de stockage selon la revendication 1, **caractérisé en ce que** le chariot principal (2) est agencé pour amener une paire de chariots satellites (10) à une rangée de stockage (8) donnée et après cela pour se mettre en mouvement afin d'effectuer une autre tâche de stockage en se mettant en mouvement dans une direction transversale en même temps que la paire de chariots satellites (10) effectue une tâche de stockage sur ladite rangée de stockage (8).

5. Système de stockage selon l'une quelconque des revendications 1 à 4,
**caractérisé en ce que** le chariot principal (2) est agencé pour desservir plus d'une paire de chariots satellites (10).

6. Système de stockage selon l'une quelconque des revendications 1 à 5,
**caractérisé en ce qu'**un convoyeur convoyant une pile de panneaux (1) dans la direction longitudinale est installé sur le chariot principal (2), le convoyeur étant agencé pour recevoir et pour décharger une pile de panneaux (1) dans la direction longitudinale sans paire de chariots satellites.

7. Système de stockage selon l'une quelconque des revendications 1 à 6,
**caractérisé en ce qu'**il y a deux chariots principaux (2), par exemple un à l'extrémité de chaque direction transversale, auquel cas une paire de chariots satellites (10) est agencée pour se mettre en mouvement afin de mettre en mouvement l'un ou l'autre chariot principal (2) quel qu'il soit.

8. Système de stockage selon l'une quelconque des revendications 1 à 7,
**caractérisé en ce que** le système de stockage comprend au moins un chariot satellite (10') supplémentaire, qui est agencé pour être mis en service sans procédures d'installation et procédures de connexion substantielles dans une situation de défaillance ou d'entretien du chariot satellite (10) régulier.
